# EUROPÄISCHE PATENTSCHRIFT

(11) **EP 3 436 325 B1**
(45) Veröffentlichungstag und Bekanntmachung des Hinweises auf die Patenterteilung: **23.08.2023**
(21) Anmeldenummer: 17714698.2
(22) Anmeldetag: 29.03.2017
(51) Int. Cl.: B60W 50/08, B60W 30/16, B60W 30/18, B60W 50/10

(54) **VERFAHREN ZUM ERZEUGEN VON STEUERDATEN FÜR EIN REGELBASIERTES UNTERSTÜTZEN EINES FAHRERS**
METHOD FOR PRODUCING CONTROL DATA FOR RULE-BASED DRIVER ASSISTANCE
PROCÉDÉ DE GÉNÉRATION DE DONNÉES DE COMMANDE POUR AIDER UN CONDUCTEUR SUR LA BASE DE RÈGLES

(30) Priorität: 29.03.2016 DE 102016205153
(43) Veröffentlichungstag der Anmeldung: 06.02.2019
(73) Patentinhaber: AVL List GmbH, 8020 Graz (AT)
(72) Erfinder: SCHÖGGL, Peter, 8151 Hitzendorf (AT); HOLZINGER, Jürgen, 8054 Graz (AT); GREBE, Uwe, Dieter, 8052 Graz (AT); OSWALD, Mario, 8072 Fernitz (AT)
(74) Vertreter: Hahner, Ralph
(86) Internationale Anmeldenummer: PCT/EP2017/057376
(87) Internationale Veröffentlichungsnummer: WO 2017/167790

(56) Entgegenhaltungen:
- EP-A1- 2 813 408
- EP-A1- 2 942 765
- DE-A1-102011 014 083
- DE-A1-102014 118 079
- Chris Davies: "For autonomous cars, driving dumb is key - SlashGear", , 16. April 2014 (2014-04-16), XP055264996, Gefunden im Internet: URL:http://www.slashgear.com/for-autonomou s-cars-driving-dumb-is-key-16325366/ [gefunden am 2016-04-13]

## Beschreibung

Die Erfindung betrifft ein Verfahren zum Erzeugen von Steuerdaten für ein regelbasiertes Unterstützen eines Fahrers beim Führen eines Fahrzeugs, insbesondere mittels eines Fahrerassistenzsystems, sowie ein solches Fahrerassistenzsystem. Bei dem erfindungsgemäßen Verfahren werden Randbedingungen zum Führen des Fahrzeugs aufgestellt und Steuerdaten zum Führen des Fahrzeugs, welche die Randbedingungen berücksichtigen, ausgegeben.

Aus dem Stand der Technik ist eine Vielzahl unterschiedlicher Sensorsysteme zur Erfassung der Umgebung eines Fahrzeugs bekannt. Mittels dieser Sensorsysteme ist es beispielsweise möglich, Spurbegrenzungen im Straßenverkehr zu erkennen oder den Abstand zu einem Vorausfahrzeug und somit eine relative Position des Vorausfahrzeugs zu bestimmen. Auch kann mittels der bekannten Sensorsysteme eine Relativgeschwindigkeit zum Vorausfahrzeug bestimmt werden.

Auf Basis dieser durch die Sensorsysteme gesammelten Informationen können Fahrzeuge in automatisierten Betriebsmodi betrieben werden. In diesen Betriebsmodi, insbesondere in einem hochautomatisierten oder vollautomatisierten Betriebsmodus, wird dem Fahrer das Führen des Fahrzeugs teilweise oder sogar vollständig abgenommen.

Ein hochautomatisiertes Fahrzeug ist hierbei ein Fahrzeug, bei welchem ein Fahrerassistenzsystem die Quer- und Längsführung für einen gewissen Zeitraum und/oder in spezifischen Situationen übernimmt, wobei der Fahrer das System dabei nicht überwacht, jedoch bei Bedarf zum Führen des Fahrzeugs mit ausreichender Zeitreserve aufgefordert wird. Grenzen des Fahrerassistenzsystems werden von diesem vorzugsweise selbst erkannt. Insbesondere ist das Fahrerassistenzsystem jedoch nicht in der Lage, aus jeder Ausgangssituation den risikominimalen Zustand herbeizuführen.

Ein vollautomatisiertes Fahrzeug ist hierbei ein Fahrzeug, bei dem ein Fahrerassistenzsystem die Quer- und Längsführung vollständig in einem definierten Anwendungsfall übernimmt, der Fahrer muss das Fahrerassistenzsystem dabei nicht überwachen. Vor dem Verlassen des Anwendungsfalls fordert das Fahrerassistenzsystem den Fahrer vorzugsweise mit ausreichender Zeitreserve, zur Übernahme der Führung des Fahrzeugs auf. Erfolgt dies nicht, wird in das Fahrerassistenzsystem vorzugsweise in dem risikominimalen Zustand zurückgeführt. Grenzen des Fahrerassistenzsystems werden bevorzugt vom Fahrerassistenzsystem selbst erkannt. Das Fahrerassistenzsystem ist vorzugsweise in allen Situationen selbst in der Lage, einen risikominimalen Zustand herbeizuführen.

Fahrerassistenzsysteme für hochautomatisierte oder vollautomatisierte Fahrzeuge vereinigen hierbei eine Vielzahl von Funktionen, wie beispielsweise Spurhalteassistent, Spurwechselassistent, Spurwechselunterstützung, Verkehrszeichenerkennung, Notbremssystem, Nothaltesystem, adaptive Geschwindigkeitsregelung etc., um eine Quer- und Längsführung zuverlässig ausführen zu können.

Die Druckschrift EP 2 942 765 A1 betrifft ein System zur Unterstützung eines Fahrers eines Fahrzeugs bei potentiellen Spurwechselvorgängen. Das von dem System ausgeführte Verfahren weist die Schritte des Generierens von Sensordaten durch zumindest einen Sensor auf, welcher die Umgebung des Fahrzeugs physisch erfasst, des Vorhersagens des zukünftigen Bewegungsverhaltens von zumindest einem erfassten Fahrzeug und des Bestimmens, ob eine Lücke auf einer benachbarten Spur des Fahrzeugs existiert. Wenn eine Nachbarspur des Fahrzeugs für das vorhergesagte Bewegungsverhalten besser geeignet ist, wird eine Empfehlung in Bezug auf die Machbarkeit eines Spurwechsels des Fahrzeugs auf diese besser geeignete Spur erzeugt, wobei das Ergebnis der Bestimmung des Vorliegens einer Lücke und das zukünftige Bewegungsverhalten des zumindest einen erfassten Fahrzeugs kombiniert werden. Aufgrund dieser Empfehlungsinformation wird eine Benachrichtigung für den Fahrer des Fahrzeugs ausgegeben, wenn ein Spurwechsel machbar ist.

Die Druckschrift WO 2013/138000 A1 betrifft ein Verfahren, um ein Fahrzeug in einer autonomen Betriebsart zu betreiben. Das Verfahren weist folgende Arbeitsschritte auf: Bestimmen, unter Benutzung eines Computersystems, eines momentanen Zustands eines Fahrzeugs, wobei das Fahrzeug konfiguriert ist, um in einer autonomen Betriebsart betrieben zu werden; Bestimmen, unter Benutzung des Computersystems, eines momentanen Zustands der Umgebung des Fahrzeugs, wobei die Umgebung des Fahrzeugs zumindest ein anderes Fahrzeug aufweist; Bestimmen, unter Benutzung des Computersystems, eines vorhergesagten Verhaltens des zumindest einen anderen Fahrzeugs auf der Grundlage des zumindest einen momentanen Zustands des Fahrzeugs und des momentanen Zustands der Umgebung des Fahrzeugs; Bestimmen, unter Benutzung des Computersystems, eines Konfidenzniveaus, wobei das Konfidenzniveau eine Wahrscheinlichkeit umfasst, dass das zumindest eine andere Fahrzeug das vorhergesagte Verhalten ausführt und wobei das Konfidenzniveau zumindest von dem vorhergesagten Verhalten, dem momentanen Zustand des Fahrzeugs und dem momentanen Zustand der Umgebung des Fahrzeugs abhängt; und Steuern, unter Benutzung des Computersystems, des Fahrzeugs in der autonomen Betriebsart auf der Grundlage des vorhergesagten Verhaltens, des Konfidenzniveaus, des momentanen Zustands des Fahrzeugs und des momentanen Zustands der Umgebung des Fahrzeugs.

Die Druckschrift US 9,248,843 B1 betrifft ein computerimplementiertes Verfahren, um Objekte in der Umgebung eines Fahrzeugs zu detektieren und darauf zu reagieren. Ein Objekt kann hierbei in der Umgebung des Fahrzeugs identifiziert werden, wobei das Objekt eine Bewegungsrichtung und einen Ort aufweist. Ein Satz möglicher Aktionen kann für das Objekt unter Benutzung von Karteninformationen erzeugt werden, welche die Umgebung des Fahrzeugs beschreiben und die Bewegungsrichtung und den Ort des Objekts. Ein Satz möglicher zukünftiger Trajektorien des Objekts wird auf der Grundlage der möglichen Aktionen generiert und ein Wahrscheinlichkeitswert jeder Trajektorie des Satzes möglicher zukünftiger Trajektorien wird auf der Grundlage von Kontextinformationen einschließlich eines Status des detektierten Objekts bestimmt. Eine abschließende zukünftige Trajektorie wird auf der Grundlage der bestimmten Wahrscheinlichkeitswerte für jede Trajektorie des Satzes möglicher zukünftiger Trajektorien bestimmt. Das Fahrzeug wird dann in der Weise manipuliert, um die abschließende zukünftige Trajektorie und das Objekt zu meiden.

Die Druckschrift WO 2015/032508 A1 betrifft ein Verfahren zur Optimierung eines Fahrerassistenzsystems, welches die Arbeitsschritte aufweist: Festlegen wenigstens eines zu optimierenden Fahrerassistenzsystems A; Ermitteln wenigstens einer Fahrzeugparameterfunktion, welche einen Betriebszustand eines Fahrzeugs charakterisiert, und wenigstens einer Umgebungsparameterfunktion, welche die Umgebung des Fahrzeugs charakterisiert; Berechnen wenigstens einer Fahrsituationskennwertfunktion, welche eine Fahrsituation des Fahrzeugs charakterisiert, wenigstens auf der Grundlage der wenigstens einen Fahrzeugparameterfunktion und/oder wenigstens einen Umgebungsparameterfunktion, Berechnen wenigstens einer Steuereingriffskennwertfunktion, welche die Aktivität des Fahrerassistenzsystem A charakterisiert; Berechnen einer Korrekturfunktion, welche von der wenigstens einen Fahrsituationskennwertfunktion abhängt und eine subjektive Wahrnehmung der Fahrsituation durch zumindest einen Fahrzeuginsassen charakterisiert, wenigstens auf der Grundlage der wenigstens einen Steuereingriffskennwertfunktion und auf der Grundlage der wenigstens einen Fahrzeugparameterfunktion und/oder der wenigstens einen Umgebungsparameterfunktion.

Die Druckschrift DE 10 2014 208 311 A1 betrifft ein Fahrerassistenzsystem mit einem Betriebsmodus für eine vollautomatisierte Fahrzeugführung eines Kraftfahrzeugs, wobei die vollautomatisierte Fahrzeugführung individualisiert ist, indem sie an den individuellen Bedürfnissen eines Fahrzeugführers angepasst ist.

Die Druckschrift DE 10 2006 039 583 A1 betrifft ein Fahrerassistenzsystem mit durch Parameter bestimmbaren Assistenzfunktionen, wobei das Fahrerassistenzsystem durch veränderbare Parameter adaptiv ausgebildet ist.

Die Druckschrift EP 2 813 408 A1 betrifft ein Verfahren zum Betreiben eines Fahrzeugs, wobei eine Fahrzeugführung eines Fahrers des Fahrzeugs überwacht wird, so dass basierend auf der überwachten Fahrzeugführung einen Fahrstil des Fahrers beschreibende Fahrparameter gebildet werden, welche einem Fahrerassistenzsystem des Fahrzeugs bereitgestellt werden, so dass bei einer Steuerung des Fahrzeugs mittels des Fahrerassistenzsystems der Fahrstil des Fahrers zumindest teilweise abgebildet wird.

Es ist eine Aufgabe der Erfindung, ein verbessertes Verfahren zum Unterstützen eines Fahrers beim Führen eines Fahrzeugs und ein verbessertes entsprechendes Fahrerassistenzsystem bereitzustellen. Insbesondere ist es eine Aufgabe der Erfindung, eine subjektive Wahrnehmung des Fahrers in Bezug auf das Führen des Fahrzeugs durch das Fahrerassistenzsystem zu verbessern.

Diese Aufgabe wird gelöst durch ein Fahrerassistenzsystem und ein Verfahren zum Unterstützen eines Fahrers beim Führen eines Fahrzeugs gemäß der unabhängigen Ansprüche. Vorteilhafte Ausführungsformen sind Gegenstand der Unteransprüche. Die Lehre der Ansprüche wird ausdrücklich zu einem Teil der Beschreibung gemacht.

Ein erster Aspekt der Erfindung betrifft ein Verfahren zum Erzeugen von Steuerdaten für ein regelbasiertes Unterstützen eines Fahrers beim Führen eines Fahrzeugs, insbesondere mittels eines Fahrerassistenzsystems, welches vorzugsweise folgende Arbeitsschritte aufweist:
- Erfassen von Werten wenigstens eines Stellparameters zum Führen des Fahrzeugs und eines Körperparameters, welcher die Körperfunktionen eines Fahrzeuginsassen, insbesondere des Fahrers, wenigstens teilweise charakterisiert;
- Erfassen von Werten wenigstens eines Eingangsparameters, welcher das Fahrszenario wenigstens teilweise charakterisiert;
- Aufstellen wenigstens einer Randbedingung zum Einstellen des wenigstens einen Stellparameters in Abhängigkeit des wenigstens eines Eingangsparameters auf der Grundlage der erfassten Werte; und
- Ausgeben von Steuerdaten zum Führen des Fahrzeugs, welche die wenigstens eine Randbedingung als Regel berücksichtigen.

Ein zweiter Aspekt der Erfindung betrifft ein Fahrerassistenzsystem zum Unterstützen eines Fahrers beim Führen eines Fahrzeugs, welches vorzugsweise wenigstens einen Sensor, welcher eingerichtet ist, Fahrsituationsdaten in Bezug auf das Fahrzeug und Körperparameterdaten des Fahrers wenigstens teilweise zu erfassen. Des Weiteren weist das Fahrerassistenzsystem vorzugsweise ein Fahrstilselektormodul auf, wobei das Fahrstilselektormodul einen Datenspeicher aufweist und eingerichtet ist, um auf die Fahrsituationsdaten und Körperparameterdaten des wenigstens einen Sensors und Daten von wenigstens einem Stellparameter zum Führen des Fahrzeugs, insbesondere über CAN-Schnittstelle, zuzugreifen. Das Fahrstilselektormodul ist eingerichtet, um Werte des wenigstens einen Stellparameters und die Sensordaten in dem Datenspeicher abzulegen und wenigstens eine Randbedingung in Bezug auf den wenigstens einen Stellparameter in Abhängigkeit der abgelegten Daten aufzustellen. Weiter weist das Fahrerassistenzsystem eine Schnittstelle zum Ausgeben von Steuerdaten zum Führen des Fahrzeugs auf, welche die wenigstens eine Randbedingung als Regel berücksichtigen.

Verkehrsdaten im Sinne der Erfindung betreffen die Absolut- und/oder Relativposition anderer Verkehrsteilnehmer zu dem Fahrzeug sowie von Kontextinformationen in Bezug auf diese Positionen. Beispielsweise kann aus den Positionen auf eine Verkehrsdichte und damit beispielsweise auf eine zu erwartende Verkehrsstörung geschlossen werden. Weiterhin können Verkehrsdaten auch die Geschwindigkeit und/oder Beschleunigung der anderen Verkehrsteilnehmer sowie Umweltdaten, beispielsweise über die Witterung, in einem für das Fahrzeug relevanten Streckenbereich umfassen.

Ein Fahrerassistenzsystem im Sinne der Erfindung ermöglicht ein hochautomatisiertes oder vollautomatisiertes Führen des Fahrzeugs.

Eine Fahrsituation im Sinne der Erfindung beinhaltet Informationen über den Zustand des Fahrzeugs, insbesondere Längsgeschwindigkeit, Quergeschwindigkeit, Längsbeschleunigung, Querbeschleunigung, Lenkwinkel, Drosselklappenstellung, Fahrspur, sowie den Zustand der Verkehrsteilnehmer in der unmittelbaren Umgebung des Fahrzeugs, d.h. jener Verkehrsteilnehmer, welche aus der Perspektive des Fahrerzeugs theoretisch wahrnehmbar, insbesondere sichtbar, sind. Eine Fahrsituation ist hierbei insbesondere eine Zustandsbetrachtung in einem Zeitpunkt. Zu verschiedenen Zeitpunkten liegen erfindungsgemäß daher vorzugsweise verschiedene Fahrszenarien vor, auch wenn die Konstellation anderer Verkehrsteilnehmer um das Fahrzeug zu den verschiedenen Zeitpunkten sich nicht verändert.

Ein Fahrszenario im Sinne der Erfindung beschreibt eine Interaktion eines Fahrzeugs mit seiner Umgebung. Insbesondere beinhaltet das Fahrszenario Informationen über die Fahrsituation. Vorzugsweise weist das Fahrszenario des Weiteren Informationen über den Verkehr, die Witterung und/oder Fahrbahndaten auf dem das Fahrzeug betreffenden Streckenabschnitt auf. Ein Fahrszenario ist vorzugsweise eine ganzheitliche Betrachtung einer Mehrzahl, insbesondere aller für die Fortbewegung des Fahrzeugs relevanter Parameter. Ein Fahrszenario ist hierbei insbesondere eine Zustandsbetrachtung in einem Zeitpunkt. Zu verschiedenen Zeitpunkten liegen erfindungsgemäß daher vorzugsweise verschiedene Fahrszenarien vor, auch wenn die Konstellation anderer Verkehrsteilnehmer um das Fahrzeug zu den verschiedenen Zeitpunkten sich nicht verändert.

Ein Stellparameter im Sinne der Erfindung ist eine Einstellung einer Stellgröße am Fahrzeug, welche zur Steuerung des Fahrbetriebs dient. Stellparameter sind insbesondere die Drosselklappen- bzw. Gaspedalstellung, ein Bremsdruck bzw. Bremssignal, eine Gangwahl, etc.

Fahrbahndaten im Sinne der Erfindung weisen wenigstens Information über die Topographie eines vorausliegenden Streckenabschnitts auf. Vorzugsweise weisen Fahrbahndaten auch Informationen über den Fahrbahnverlauf des jeweiligen Streckenabschnitts auf.

Ein Modul im Sinne der Erfindung ist ein Bestandteil eines Computersystems. Ein Modul kann hierbei insbesondere als Hardware und/oder Software ausgeführt sein.

Eine Trajektorie im Sinne der Erfindung ist der zeitliche Verlauf der Bewegung eines physikalischen Körpers, insbesondere eines Fahrzeugs oder anderen Verkehrsteilnehmers.

Ein Fahrstil im Sinne der Erfindung ist die Art und Weise, wie ein Fahrzeug geführt wird. Ein Fahrstil zeichnet sich durch das Verhalten des Fahrzeugführers oder eines fahrzeugführenden Fahrerassistenzsystems in verschiedenen Fahrszenarien aus.

Vorzugsweise sind dies Verhaltensweisen, welche sich auf Fahrszenarien beziehen, in welchen der Fahrzeugführer Veränderungen am Fahrzeugzustand vornehmen muss, beispielsweise das Einleiten eines Überholvorgangs, ein Spurwechsel, etc.

Steuerdaten im Sinne der Erfindung sind Daten, welche zum Steuern eines Fahrzeugs eingesetzt werden können. Die Steuerdaten umfassen dabei wenigstens eine Zuordnungsvorschrift, insbesondere eine Funktion oder Tabelle, welche die wenigstens eine Randbedingung angibt.

Eine Randbedingung bezieht sich auf wenigstens eine Konstellation wenigstens von Eingangsparametern, denen Werte von Stellparametern und Körperparameter zugeordnet sind. Die Werte der Stellparameter und Körperparameter enthalten hierbei Informationen über die subjektive Wahrnehmung des Insassen und/oder dessen wahrscheinliche Verhaltensweise in Bezug auf ein Fahrszenario.

Ein Fahrstilattribut im Sinne der Erfindung ist geeignet, um die subjektive Wahrnehmung eines Fahrers oder einer Fahrergruppe in Bezug auf den Fahrstil eines Fahrerassistenzsystems zu charakterisieren. Fahrstilattribute sind insbesondere die Fahrzeit, d.h. die Zügigkeit mit welcher das Fahrerassistenzsystem versucht, eine Strecke zurückzulegen, eine empfundene, d.h. subjektiv wahrgenommene, Sicherheit, eine empfundene Effizienz, eine Fahrdynamik und eine Fahrbarkeit, d.h. eine subjektive Wahrnehmung des Fahrverhaltens des Fahrzeugs als Reaktion auf Aktionen durch das Fahrerassistenzsystem. Weitere Fahrstilattribute sind vorzugsweise solche Eigenschaften, welche bei dem Fahrer zwar keine subjektive Wahrnehmung bzw. Eindruck erzeugen, an deren objektiven Werten der Fahrer jedoch Interesse haben kann. Hierzu zählen beispielsweise die Emission wie auch der tatsächliche Energieverbrauch.

Die Erfindung beruht insbesondere auf der Erkenntnis, dass die Bewertung eines Fahrerassistenzsystems beim automatisierten bzw. vollautomatisierten Führen eines Fahrzeugs in Zukunft in ganz wesentlichem Maße davon abhängen wird, wie die subjektive Wahrnehmung des Fahrers bei den Fahraktionen des Fahrerassistenzsystems ausfällt. Daher ist es von Vorteil, bei der Festlegung eines Fahrziels durch das Fahrerassistenzsystem nicht nur gesetzliche Vorgaben wie Geschwindigkeitsbeschränkung, Überholverbot, etc., und Sicherheitsaspekte zur Vermeidung von Unfällen zu berücksichtigen, sondern auch ein oder mehrere Randbedingungen zu berücksichtigen, die für das Fahrerlebnis eines Fahrzeuginsassen und/oder eine abschließende Beurteilung einer durch das Fahrerassistenzsystem zurückgelegten Strecke ausschlaggebend sind. Dies wird erfindungsgemäß durch das Einbeziehen von Randbedingungen, welche insbesondere Fahrstilattribute betreffen, gewährleistet.

Eine weitere Erkenntnis, welche in die Erfindung eingeflossen ist, besteht darin, dass Fahrerassistenzsysteme durch die Möglichkeit der digitalen Informationsverarbeitung in der Lage sind, bei der Planung der Trajektorie des Fahrzeugs, im Gegensatz zu dem Fahrer, Informationen mit einzubeziehen, welche weit über die aktuelle Fahrsituation hinausgehen. Durch einen Datenaustausch mit anderen Fahrzeugen (car-to-car) oder mit der Infrastruktur (car-to-infrastructure) sowie durch das Heranziehen von Topographiedaten und Fahrbahnverlaufsdaten können zukünftige Fahrszenarien simuliert werden.

Es ist hierbei zu beachten, dass das Fahrerassistenzsystem im Allgemeinen über mehr Information verfügt als die Insassen des Fahrzeugs, insbesondere als der Fahrer. Durch das Wissen über die Topographie oder auch der Verkehrsdichte oder über eine Bremsung eines nicht sichtbaren Fahrzeugs kann das Fahrzeug eine unter Sicherheitsaspekten oder Energieeffizienzaspekten vorausschauend optimierte Trajektorie wählen. Da der Fahrer nicht über diese Information verfügt und im Normalfall auch nicht in der Lage ist, eine dem Fahrerassistenzsystem entsprechende Menge an paralleler Information zu verarbeiten, kann eine solche, nach rein objektiven Kriterien optimierte Fahrweise des Fahrerassistenzsystems zur Verunsicherung bzw. Unzufriedenheit beim Fahrer führen, da er diese Entscheidungen des Fahrerassistenzsystem nicht nachvollziehen kann.

Vor diesem Hintergrund schlägt die Erfindung vor, Randbedingungen in Bezug auf die Fahrgewohnheiten und/oder Randbedingungen in Bezug auf die durch Körperdaten des Insassen charakterisierte Wahrnehmung des Fahrers aufzustellen, um eine nach objektiven Kriterien ideale Trajektorie beim Führen des Fahrzeugs durch das Fahrerassistenzsystems an die menschliche Erwartungshaltung anpassen zu können.

Durch die Kombination des dynamischen Simulierens von Fahrszenarien zur Vorhersage des Verkehrsgeschehens für eine vorausschauende Fahrweise des Fahrerassistenzsystems in Verbindung mit der Berücksichtigung der Randbedingungen, welche insbesondere Fahrstilattribute in Bezug auf einen Fahrer oder eine Fahrergruppe charakterisieren, kann das hochautomatisierte bzw. vollautomatisierte Führen des Fahrzeugs gleichzeitig sowohl in Bezug auf objektive und subjektive Kriterien optimiert werden.

Mittels des erfindungsgemäßen Verfahrens und der Vorrichtung ist es möglich, das Fahrzeug nach einer Art von Trainingsphase, in welcher die Steuerdaten erzeugt werden, auf den jeweiligen Insassen bzw. Fahrer oder auch auf die Konfiguration des Fahrzeugs einzustellen. Auf diese Weise kann ein Fahrerassistenzsystem bei einem Fahrerwechsel nach kurzer Zeit bzw. nach einer kurzen zurückgelegten Strecke feststellen, ob dieser mit dem Fahrstil des Fahrerassistenzsystems zufrieden ist und gegebenenfalls Modifikationen am Fahrstil vornehmen. Des Weiteren kann festgestellt werden, ob das Fahrzeug sich, beispielsweise aufgrund einer veränderten Zuladung, eines veränderten Reifendrucks oder ähnlichem anders verhält. Auch auf der Grundlage solcher festgestellter Veränderungen an der Fahrzeugkonfiguration kann erfindungsgemäß eine Modifikation des Fahrstils vorgenommen werden. Weiter kann vorgesehen sein, dass die Einstellungen auf der Grundlage des erfindungsgemäßen Verfahrens in der Art eines Regelkreises ständig aktualisiert werden, um sich auf Veränderungen während der Fahrzeugparameter einstellen zu können.

In einer vorteilhaften Ausführungsform weist das erfindungsgemäße Verfahren ein Führen des Fahrzeugs, wenigstens zeitweise, auf der Grundlage der Steuerdaten, auf.

In einer weiteren vorteilhaften Ausführungsform des erfindungsgemäßen Verfahrens bildet die wenigstens eine Randbedingung einen Fahrstil des Fahrers oder einer Fahrergruppe nach. Ein Fahrstil einer Fahrergruppe kann beispielsweise durch eine statistische Auswertung von Fahrdaten mehrerer Fahrer identifiziert werden, wobei Fahrergruppen beispielsweise nach Schlecht, Alter, etc. gebildet werden können.

In einer weiteren vorteilhaften Ausführungsform des erfindungsgemäßen Verfahrens bildet die wenigstens eine Randbedingung einen adaptierten Fahrstil des Fahrers oder einer Fahrergruppe nach, welche die unterschiedlichen Empfindungen des Fahrers oder einer Fahrergruppe zwischen automatischer Führung und manueller Führung des Fahrzeugs widerspiegelt. Je nach Risikoaffinität und Technikvertrauen erwarten verschiedene Insassen bzw. verschiedene Fahrer von einem Fahrerassistenzsystem eine Fahrweise, welche sich von dem individuellen Fahrstil des Fahrers bzw. des Insassen unterscheidet. So können risikoaffine Fahrer bzw. Insassen erwarten, dass ein Fahrerassistenzsystem fahrphysikalische Grenzen mehr ausreizt, als dies der Fahrer, beispielsweise aufgrund mangelnder Fahrerfahrung, sich selbst zutrauen würde. Diese Funktion der Erfindung ist insbesondere vor dem Hintergrund wichtig, dass die eigene Fahrpraxis von Fahrern durch manuelles Fahrens in Zukunft voraussichtlich stark abnehmen wird.

In einer weiteren vorteilhaften Ausführungsform des erfindungsgemäßen Verfahrens wird das Erfassen von Werten wenigstens teilweise während eines automatischen Führens, insbesondere durch das Fahrerassistenzsystem, des Fahrzeugs vorgenommen. In dieser Ausführungsform werden Körperparameter des Fahrzeuginsassen erfasst, um die subjektive Empfindung in Bezug auf den Fahrstill eines Fahrerassistenzsystems abbilden zu können.

In einer weiteren vorteilhaften Ausführungsform des erfindungsgemäßen Verfahrens gibt der wenigstens eine Stellparameter an, ob der Fahrer bei einer Konstellation des wenigstens einen Stellparameters zu dem wenigstens einen Eingangsparameter ein automatisches Führen, insbesondere durch das Fahrerassistenzsystem, des Fahrzeugs unterbricht. Insbesondere in jenen Situationen, in welchen der Fahrer das automatische Führen unterbricht, kann daraus geschlossen werden, dass der Fahrer in Bezug auf seine subjektiv wahrgenommene Sicherheitswahrnehmung einen Mangel bei dem Führen durch das Fahrerassistenzsystem wahrgenommen hat. Für ein entsprechendes Fahrszenario sollte ein Fahrerassistenzsystem daher alternativ Fahrstrategien entwerfen, um bei dem Fahrer ein verbessertes Fahrgefühl zu hinterlassen.

In einer weiteren vorteilhaften Ausführungsform weist das erfindungsgemäße Verfahren des Weiteren den Arbeitsschritt des Simulierens, parallel zum Führen des Fahrzeugs, von wenigstens einem zukünftigen Fahrszenario auf der Grundlage der Werte des wenigstens einen Eingangsparameters, und Simulieren von wenigstens einer Trajektorie des Fahrzeugs auf der Grundlage des wenigstens einen zukünftigen Fahrszenarios auf, wobei die Steuerdaten auf der wenigstens einen simulierten Trajektorie beruhen. Durch das Simulieren von zukünftigen Fahrszenarien können diese beim Führen des Fahrzeugs berücksichtigt werden und somit eine optimale Führung erreicht werden.

In einer weiteren vorteilhaften Ausführungsform des erfindungsgemäßen Verfahrens erfolgt das Simulieren in Echtzeit, insbesondere auf der Grundlage von Echtzeitdaten des vorliegenden Fahrszenarios.

In einer weiteren vorteilhaften Ausführungsform des erfindungsgemäßen Verfahrens wird eine Mehrzahl möglicher voraussichtlicher Trajektorien simuliert, und das Verfahren weist des Weiteren einen Arbeitsschritt des Bewertens der Mehrzahl möglicher Trajektorien auf der Grundlage von wenigstens einer Randbedingung auf, wobei die Steuerdaten die am besten bewertete voraussichtliche Trajektorie widerspiegeln.

In einer weiteren vorteilhaften Ausführungsform des erfindungsgemäßen Verfahrens charakterisiert die wenigstens eine Randbedingung ein Fahrstilattribut aus der folgenden Gruppe: Fahrzeit, Emission, Energieverbrauch, Sicherheit, Fahrdynamik, Fahrbarkeit, empfundene Effizienz, empfundene Sicherheit.

In einer weiteren vorteilhaften Ausführungsform des erfindungsgemäßen Verfahrens erfolgt das Simulieren periodisch, bevorzugt mit einer Periodizität von etwa 1 Sekunde bis etwa 10 Minuten, bevorzugter von etwa 10 Sekunden bis etwa 1 Minute, und am bevorzugtesten von etwa 1 Sekunde, etwa 10 Sekunden, etwa 1 Minute oder 10 Minuten.

In einer weiteren vorteilhaften Ausführungsform des erfindungsgemäßen Verfahrens deckt das Simulieren einen zukünftigen Zeitraum von etwa 1 Sekunde bis etwa 10 Minuten, bevorzugt von etwa 10 Sekunden bis etwa 1 Minute, und am bevorzugtesten von etwa 1 Sekunde, etwa 10 Sekunden oder etwa 1 Minute ab.

In einer weiteren vorteilhaften Ausführungsform des erfindungsgemäßen Verfahrens werden mehrere Randbedingungen berücksichtigt, deren Fahrstilattribute unterschiedliche gewichtet sind. Hierdurch können einige Fahrstilattribute bei der Optimierung überproportional und andere Fahrstilattribute unterproportional berücksichtigt werden.

In einer weiteren vorteilhaften Ausführungsform des erfindungsgemäßen Verfahrens erfolgt das Bewerten auf der Grundlage einer Kostenfunktion, in welche die wenigstens eine Randbedingung eingeht.

In einer weiteren vorteilhaften Ausführungsform des erfindungsgemäßen Verfahrens wird beim Aufstellen der wenigstens einen Randbedingung berücksichtigt, dass der wenigstens eine Körperparameter wenigstens einen vorgegebenen Grenzwert nicht überschreitet und/oder innerhalb wenigstens eines Wertebereichs liegt.

In einer weiteren vorteilhaften Ausführungsform des erfindungsgemäßen Verfahrens wird der Fahrer beim Führen des Fahrzeugs wenigstens teilweise über das Fahrszenario und/oder ein zukünftiges Fahrszenario in Kenntnis gesetzt wird. Durch diese Hintergrundinformation kann der Fahrer das Führen durch das Fahrerassistenzsystem besser bewerten. Dies betrifft insbesondere Sachverhalte, welche der Fahrer (noch) nicht wahrnehmen kann, weil diese nicht in seinem Sichtfeld liegen oder sich aus einem simulierten zukünftigen Fahrszenario ergeben.

Die im Vorhergehenden in Bezug auf den ersten Aspekt der Erfindung und dessen vorteilhafte Ausführungsform beschriebenen Merkmale und Vorteile gelten auch für den zweiten Aspekt der Erfindung entsprechend.

Weitere Merkmale, Vorteile und Anwendungsmöglichkeiten der Erfindung ergeben sich aus der nachfolgenden Beschreibung von Ausführungsbeispielen im Zusammenhang mit den Figuren. Es zeigt wenigstens teilweise schematisch:
**Figur 1** ein Fahrzeug mit einem erfindungsgemäßen Fahrerassistenzsystem;
**Figur 2** ein Flussdiagramm, welches einen möglichen Ablauf eines erfindungsgemäßen Verfahrens darstellt;
**Figur 3** eine Darstellung eines ersten Beispiels eines Fahrszenarios aus der Vogelperspektive;
**Figur 4** eine Darstellung eines zweiten Beispiels eines Fahrszenarios aus der Vogelperspektive;
**Figur 5** eine weitere Darstellung des ersten Beispiels eines Fahrszenarios nach Fig. 3 aus einer seitlichen Draufsicht;
**Figur 6** eine Darstellung eines dritten Fahrszenarios aus der Vogelperspektive; und
**Figur 7** eine Darstellung eines vierten Beispiels eines Fahrszenarios aus der Vogelperspektive.

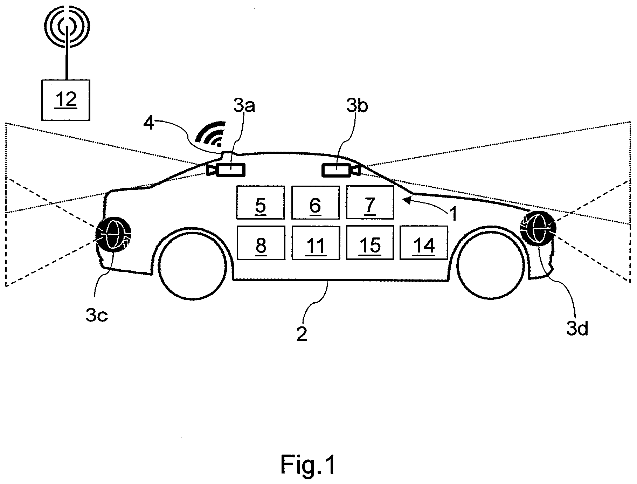

**Figur 1** zeigt ein Fahrzeug 2 mit einem Ausführungsbeispiel des erfindungsgemäßen Fahrerassistenzsystems 1. Das Fahrerassistenzsystem 1 weist hierbei mehrere Sensoren 3a - 3d auf, und in dem in Fig. 1 dargestellten Beispiel sind dies eine nach hinten gerichtete Kamera 3a, eine nach vorne gerichtete Kamera 3b, ein nach vorne gerichtetes Radarsystem 3d und ein nach hinten gerichtetes Radarsystem 3c. Die von den einzelnen Sensoren erfassten Daten werden vorzugsweise drahtlos oder kabelgebunden an ein Vorhersagemodul 6 des Fahrerassistenzsystems 1 übertragen. Weitere Elemente des Fahrerassistenzsystems 1 sind eine erste Datenschnittstelle 4, welche, beispielsweise über einen Mobilfunksendemast, eine Datenverbindung zu einer Infrastruktur, insbesondere einem zentralen Verkehrsserver 12, aufnehmen kann und eine zweite Datenschnittstelle 5, welche vorzugsweise mit einem zweiten Datenspeicher 11 über eine Datenverbindung verbunden ist, in welcher weiter vorzugsweise Fahrbahndaten abgelegt sind. Über die erste Datenschnittstelle 4, welche vorzugsweise als Funkschnittstelle ausgebildet ist, können somit Verkehrsdaten über die Infrastruktur, beispielsweise den Datenserver 12 oder auch Verkehrsdaten direkt von anderen Verkehrsteilnehmern 13a - 13g empfangen und/oder abgerufen werden. Über die zweite Datenschnittstelle 5 können Fahrbahndaten, insbesondere Topographie, Fahrbahnverlauf, Hinweise auf die Infrastruktur etc. eines relevanten Fahrbahnabschnitts im Fahrerassistenzsystem 1 eingelesen und dort verarbeitet werden. Auch die zweite Datenschnittstelle kann prinzipiell als

Funkschnittstelle ausgebildet sein und die Fahrbahndaten von dem Datenserver 12 oder einer anderen Quelle beziehen.

Zusätzlich oder alternativ zu den Sensoren 3a - 3d sind eine Vielzahl von anderen Sensoren möglich, beispielsweise Ultraschall- und/oder Lidar-Sensoren.

Mittels der Sensoren kann die Fahrsituation des Fahrzeugs im Verkehr überwacht werden. So kann mit einem Ultraschallsensor beispielsweise der Nahbereich des Fahrzeugs, beispielsweise beim Einparken überwacht werden und mit einem Radarsystem der Abstand und die relative Geschwindigkeit, insbesondere Beschleunigung, zu anderen Fahrzeugen im Sichtfeld des Fahrzeugs 2 bestimmt werden. Mit einem Lidar-Sensor können Gegenstände in der Umgebung des Fahrzeugs 2 und auch Abstände zu anderen Fahrzeugen festgestellt werden und mit der Kamera die Fahrspur sowie Verkehrszeichen oder auch Gegenstände im Umfeld des Fahrzeugs 2 erkannt und gegebenenfalls sogar identifiziert werden.

Das Fahrerassistenzsystem 1 ist hierbei vorzugsweise in der Weise ausgebildet, um das Fahrzeug 2 hochautomatisiert oder sogar vollautomatisiert zu führen. Hierfür sind in erster Linie jene Informationen relevant, welche das Fahrerassistenzsystem 1 mit seinen im Fahrzeug verbauten Sensoren 3a - 3d (on-board) erfassen kann. Dies ist insbesondere wichtig, wenn das Fahrerassistenzsystem 1 keine Datenverbindung zu dem zentralen Datenserver 12, anderer Infrastruktur oder anderen Verkehrsteilnehmern 13a - 13g hat, da das Fahrerassistenzsystem 1 das Fahrzeug 2 in diesem Fall autonom unter Gewährleistung der größtmöglichen Sicherheit für das Fahrzeug 2 und dessen Insassen führen muss.

Werden zusätzlich zu den Informationen der dem Fahrerassistenzsystem 1 zugeordneten Sensoren 3a - 3d Daten hinzugezogen, welche von der Infrastruktur oder anderen Verkehrsteilnehmern 13a -13g, insbesondere vorausfahrenden Verkehrsteilnehmern, übermittelt werden, so kann das Fahrerassistenzsystem 1 eine noch vorausschauendere Fahrweise realisieren, als dies erfindungsgemäß schon allein mit den Daten der fahrerassistenzeigenen Sensoren 3a - 3d möglich ist.

Das Fahrerassistenzsystem 1 gemäß Fig. 1 weist des Weiteren ein Vorhersagemodul 6 auf, welches eingerichtet ist, zukünftige Fahrszenarien auf der Grundlage eines momentanen Fahrszenarios und/oder vergangener Fahrszenarien zu simulieren. Des Weiteren gehen in die Simulation des Vorhersagemoduls 6 Verkehrsdaten und Fahrbahndaten sowie Daten über die Witterung am Ort des Fahrzeugs 2 oder einem anderen Ort auf einem relevanten Streckenabschnitt ein.

Auf der Grundlage des zukünftigen Fahrszenarios werden in der Folge von dem Vorhersagemodul 6 eine Vielzahl von möglichen Trajektorien des Fahrzeugs simuliert. Diese werden an ein Optimierungsmodul 7 ausgegeben, welches wiederum eine der Trajektorien 10a, 10b als ideale Trajektorien auswählen kann. Diese Art von Simulation kann als Blick in die Kristallkugel veranschaulicht werden, d.h. ein Voraussehen eines mit hoher Wahrscheinlichkeit eintretenden Fahrszenarios bzw. einer solchen Fahrsituation. Beispielsweise kann ein allgemeiner als Ziehharmonika-Effekt bekannte Abfolge von Anfahren und Abbremsen in einem Stau sowie die Propagation dieses Ziehharmonika-Effekts durch den Stau vorhergesagt werden und die Trajektorie des eigenen Fahrzeugs 1 intelligent an diese Entwicklung angepasst werden.

Ein Steuermodul des Fahrerassistenzsystems ist insbesondere über eine Datenverbindung mit den Steuerungen des Lenksystems, des Bremssystems und/oder des Antriebssystems des Fahrzeugs 2 verbunden, um die entsprechenden Trajektorien 10a, 10b, 10c auszuführen.

Das in Fig. 1 dargestellte Fahrerassistenzsystem 1 weist des Weiteren ein Fahrstilselektormodul 14 auf. Dieses Fahrstilselektormodul 14 dient insbesondere dazu, um eine Angabe des Fahrers bzw. der Insassen in Bezug auf den von ihnen gewünschten Fahrstil des Fahrerassistenzsystems zu erfassen. Das Fahrstilselektormodul 14 weist daher insbesondere eine Benutzerschnittstelle, z.B. ein berührungsempfindliches Display auf. Alternativ oder zusätzlich kann auch vorgesehen sein, dass als Benutzerschnittstelle ein Mobiltelefon oder sonstige elektronische Vorrichtung, welche über eine Datenverbindung mit dem Fahrerassistenzsystem 1 verbunden werden kann, eingesetzt wird. Vorzugsweise ist das Fahrstilselektormodul 14 in der Weise ausgebildet, um während der manuellen Fahrt durch einen Fahrer oder während einer automatisierten Fahrt Fahrstilattribute in Bezug auf dessen Fahrstil eigenständig zu generieren. Dafür kann das Fahrstilselektormodul 14 auf Fahrsituationsdaten, Verkehrsdaten und Fahrbahndaten, welche ein Fahrszenario wenigstens teilweise charakterisieren, zugreifen. Des Weiteren kann das Fahrstilselektormodul 14 auf Daten in Bezug auf wenigstens einen Stellparameter zum Führen des Fahrzeugs 2 und Körperparameter von Insassen, insbesondere des Fahrers, zugreifen. Wertekonstellationen der Fahrszenarien zu den Stellparametern werden vorzugsweise in einem zweiten Datenspeicher 15, welcher dem Fahrstilselektormodul 14 zugeordnet ist, gespeichert: Auf diese Weise kann das Fahrstilselektormodul 14 Randbedingungen, welche in der Folge Fahrstilattribute des Fahrerassistenzsystems 1 charakterisieren, erstellen. In dem zweiten Datenspeicher 15 sind somit Korrelationen zwischen verschiedenen Fahrszenarien und entsprechenden Konstellationen von Stellparameterwerten hinterlegt, welche in den entsprechenden Fahrszenarien angewandt werden können.

Die einzelnen Module des Fahrerassistenzsystems 1 sind vorzugsweise Bestandteil einer Recheneinrichtung in dem Fahrzeug 1, insbesondere von einem oder mehreren Bordcomputern. Die einzelnen Module sind hierbei als Hardware- oder Softwarekomponenten ausgebildet. Als Sensoren 3a - 3d des Fahrerassistenzsystems 1 können insbesondere auch Sensoren verwendet werden, welche zusätzlich anderen Systemen des Fahrzeugs 2 zugeordnet oder Teil dieser anderen Systeme sind.

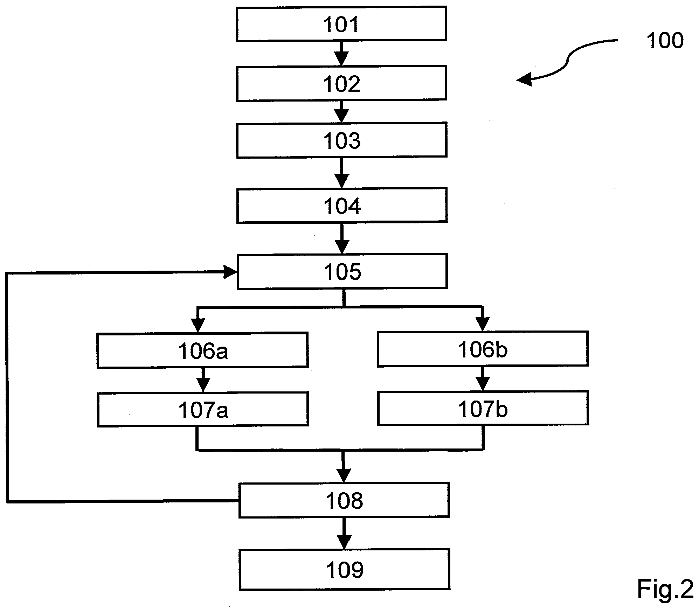

Das erfindungsgemäße Verfahren, dessen Ausführungsbeispiele schematisch in dem Flussdiagramm der **Fig. 2** dargestellt sind, wird im Folgenden anhand der Figuren 2 bis 6 erläutert.

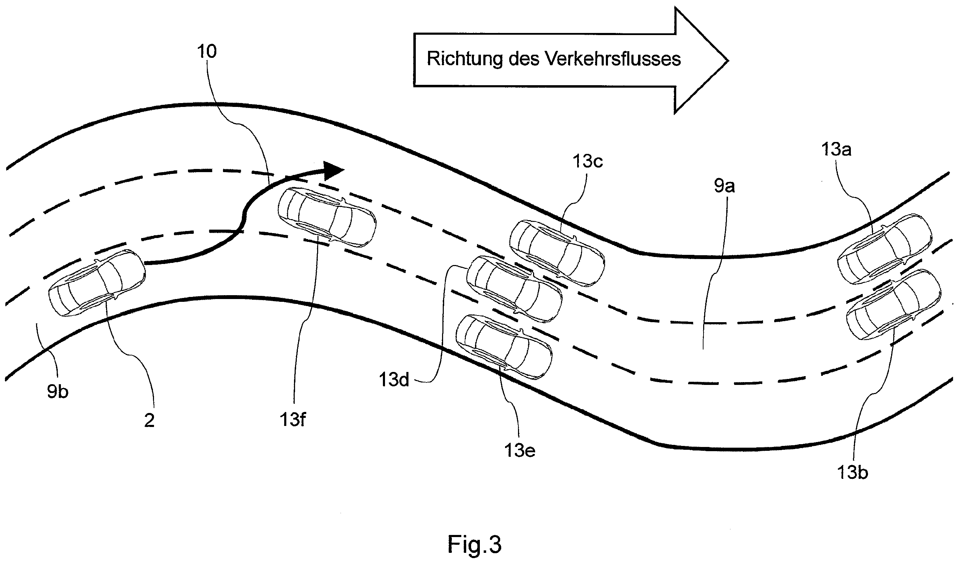

**Figur 3** zeigt ein Beispiel eines Fahrszenarios, in welchem sich ein Fahrzeug 2 am linken Bildrand auf einer dreispurigen Straße befindet. Vor dem Fahrzeug fährt ein weiteres Fahrzeug 13f auf der mittleren Fahrspur und davor wiederum drei Fahrzeuge 13c, 13d, 13e nebeneinander auf allen drei Fahrspuren. Weiter voraus fahren zwei Fahrzeuge 13a, 13b, ebenfalls nebeneinander auf der linken und der mittleren Fahrspur. Dieses momentane Fahrszenario wird, insbesondere mittels der in dem Fahrzeug 2 angeordneten Sensoren 3a - 3d erfasst 102. Da das Fahrzeug 2 mit dem Fahrerassistenzsystem 1 eine höhere Geschwindigkeit als das vorausfahrende Fahrzeug 13f auf der mittleren Fahrspur aufweist, wird das Fahrerassistenzsystem 1 in diesem Fahrszenario typischerweise ein Überholmanöver in Bezug auf das Fahrzeug 13f einleiten und dazu die Fahrspur wechseln, wie dies durch den Pfeil 10 angedeutet ist. Das Fahrzeug 2 wird hierbei durch das Fahrerassistenzsystem 1 geführt 105.

Erfindungsgemäß werden nunmehr parallel zum Führen des Fahrzeugs 2, insbesondere in Echtzeit, weitere zukünftige Fahrszenarien durch das Fahrerassistenzsystem 1 simuliert 106a, 106b. Die Simulation erfolgt insbesondere dynamisch, d.h. vorausgehend simulierte Fahrszenarien werden jeweils durch das aktuelle ersetzt.

Anhand der mittels des Radarsensors 13d ermittelten Geschwindigkeiten der Fahrzeuge in der unmittelbaren Umgebung des Fahrzeugs 2 kann das Fahrerassistenzsystem 1 durch das Simulieren 106a, 106b feststellen, dass das auf der linken Fahrspur, d.h. der Überholspur, fahrende Fahrzeug 13c eine wesentlich geringere Geschwindigkeit als die daneben fahrenden Fahrzeuge 13d, 13e aufweist. Würde das Fahrzeug 2 mit dem Fahrerassistenzsystem 1, wie in Fig. 3 gezeigt, ein Überholmanöver mit großer Geschwindigkeit einleiten und damit der Trajektorie 10 folgen, so stellt das Fahrerassistenzsystem 1 durch das Simulieren 106a, 106b fest, dass sich das Fahrzeug 2 mit dem Fahrerassistenzsystem 1 in einem zukünftigen Fahrszenario in einer eingekeilten Position zwischen dem vorausfahrenden Fahrzeug 13c und dem dann neben dem Fahrzeug 2 fahrenden Fahrzeug 13f befinden würde.

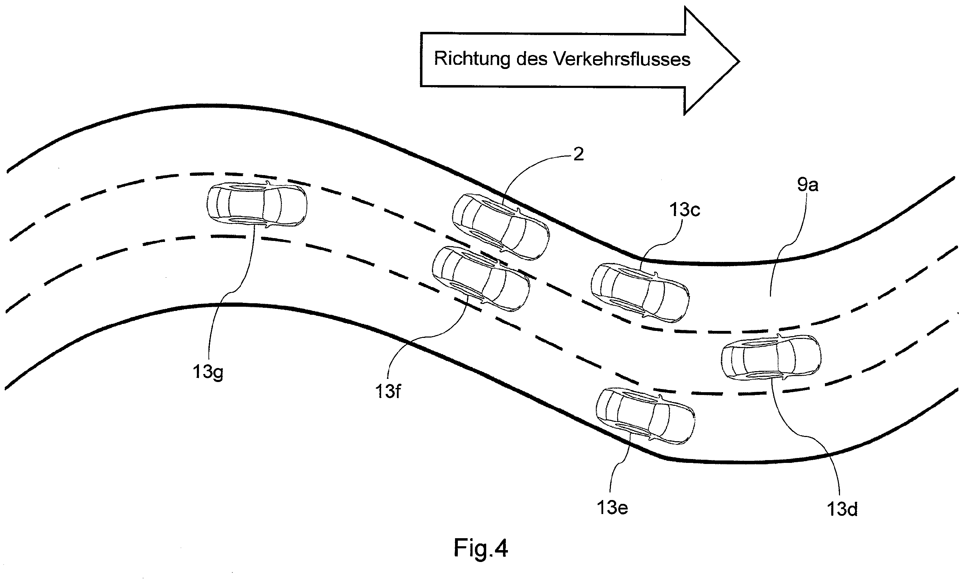

Dies ist in **Fig. 4** dargestellt. Das Fahrzeug 2 müsste in diesem Fahrszenario mithin eine starke Abbremsung vollziehen, um sich der Geschwindigkeit des vorausfahrenden Fahrzeugs 13c auf der Überholspur anzupassen und könnte den Überholvorgang in Bezug auf das Fahrzeug 13f nicht vollenden. Das der Trajektorie 10 entsprechende Fahrmanöver wird daher bei einem Insassen des Fahrzeugs 2 eine subjektive Wahrnehmung hervorrufen, dass das Fahrerassistenzsystem 1 wenig vorausschauend fährt und daher eine schlechte Beurteilung in Bezug auf die durch das Fahrerassistenzsystem 1 erreichte Fahrbarkeit, d.h. das durch das Fahrerassistenzsystem 1 erzeugte, subjektiv durch einen Insassen wahrgenommene Fahrverhalten, hervorrufen. Auch wird der Insasse sich bewusst sein, dass das eingeleitete Manöver durch eine etwaige Beschleunigung oder wenigstens die hohe Geschwindigkeit und das abrupte Abbremsen hinter dem Fahrzeug 13c zu einer geringen Energieeffizienz bzw. einem hohen Energieverbrauch führt, was ebenfalls einen negativen Eindruck bei dem Insassen hinterlassen wird.

Das Fahrerassistenzsystem 1 simuliert daher vorzugsweise des Weiteren eine Mehrzahl an verschiedenen möglichen Trajektorien 106a ausgehend von dem momentanen Fahrszenario der Fig. 3 und unter Berücksichtigung des zukünftigen Fahrszenarios der Fig. 4 und wählt jene Trajektorie 107a aus, welche bei den Insassen einen möglichst positiven Gesamteindruck des Fahrstils des Fahrerassistenzsystems 1 hervorruft. Beispielsweise könnte das Fahrerassistenzsystem 1 in dem momentanen Fahrszenario der Fig. 3 dem vorausfahrenden Fahrzeug 13f folgen, kein Überholmanöver einleiten oder aber lediglich einen Fahrspurwechsel mit reduzierter Geschwindigkeit auf die Überholspur einleiten, um das Fahrzeug 13c nach einem möglichen Fahrspurwechsel desselbigen auf die mittlere Fahrspur schlussendlich überholen zu können. Alternativ kann eine ideale Trajektorie auch direkt unter Berücksichtigung eines zukünftiges Fahrszenarios berechnet werden 107b.

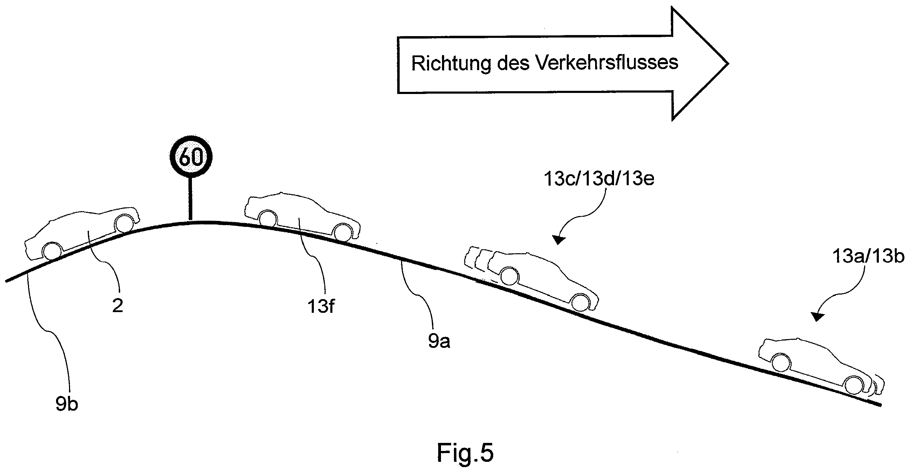

Vorzugsweise kann das Fahrerassistenzsystem 1 des Fahrzeugs 2 hierbei auch berücksichtigen, wie ein vorausliegender Fahrbahnabschnitt 9a verläuft oder, wie in **Fig. 5** dargestellt, welche Topographie auf dem vorausliegenden Fahrbahnabschnitt 9a zu erwarten ist und ob gegebenenfalls durch die Infrastruktur weitere Faktoren bestehen, welche berücksichtigt werden sollten, wie beispielsweise eine Geschwindigkeitsbegrenzung, wie dies ebenfalls in Fig. 5 dargestellt ist. Unter Berücksichtigung der in Fig. 5 gezeigten Topographie wählt das Fahrerassistenzsystem 1 des Fahrzeugs 2 eine geringere Beschleunigung bzw. Geschwindigkeit, da in die Simulation 106a, 106b die Information eingeht, dass der vorausliegende Fahrbahnabschnitt 9a ein abfallendes Gefälle aufweist und dass auf diesem Gefälle zusätzlich eine Geschwindigkeitsbegrenzung vorgeschrieben ist.

Bezieht das Fahrerassistenzsystem 1 des Weiteren Echtzeitdaten in die Simulation von Fahrszenarien 106a, 106b mit ein, welche durch Infrastruktur und/oder andere, insbesondere vorausfahrende und/oder nachfolgende Verkehrsteilnehmer 13a, 13b, 13c, 13ds, 13e, 13f, 13g erfasst wird, so kann es zukünftige Fahrszenarien noch genauer simulieren und dabei Information berücksichtigen, welche sich nicht aus dem Erfassen und Auswerten der momentanen Fahrsituation 102 ableiten lässt.

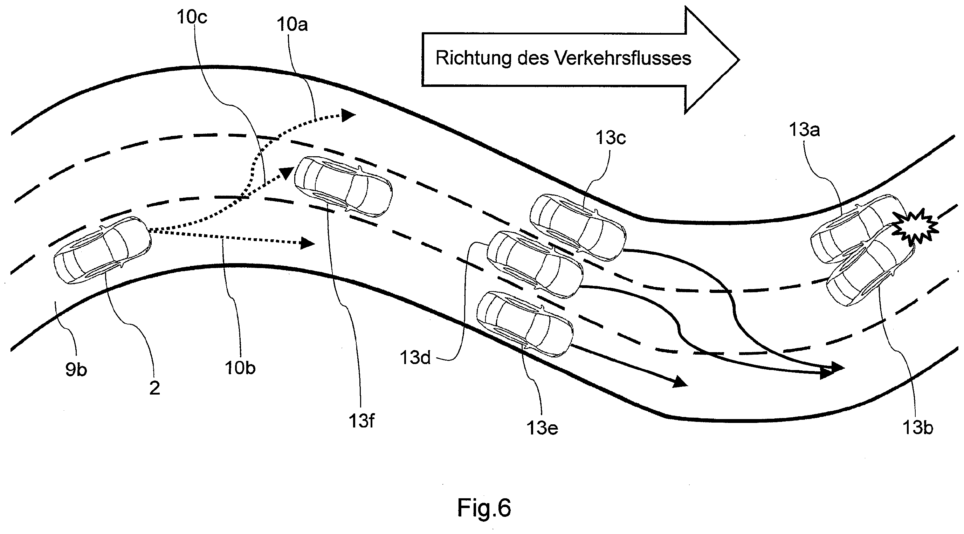

Beispielsweise wird in **Fig. 6** ein modifiziertes Fahrszenario der Fig. 3 gezeigt, in welcher die weit vor dem Fahrzeug 2 mit Fahrerassistenzsystem 1 vorausfahrenden Fahrzeuge 13a und 13b einen Auffahrunfall verursachen. Wird diese Information von den Fahrzeugen 13a, 13b oder den Fahrzeugen 13c, 13d, 13e, welche eine unmittelbare Sicht auf die Fahrsituation der beiden Fahrzeuge 13a, 13b haben, direkt oder über eine Infrastruktur an das Fahrzeug 2, welches durch das Fahrerassistenzsystem 1 geführt wird, weitergeleitet, so kann das Fahrzeug 2 dieses Ereignis in seine Simulation mit einbeziehen. Wie in der Fig. 6 dargestellt, kann das Fahrerassistenzsystem 1 zwischen verschiedenen Trajektorien 10a, 10b, 10c wählen, um ein sich aus dem Fahrszenario der Fig. 6 ergebendes zukünftiges Fahrszenario zu meistern.

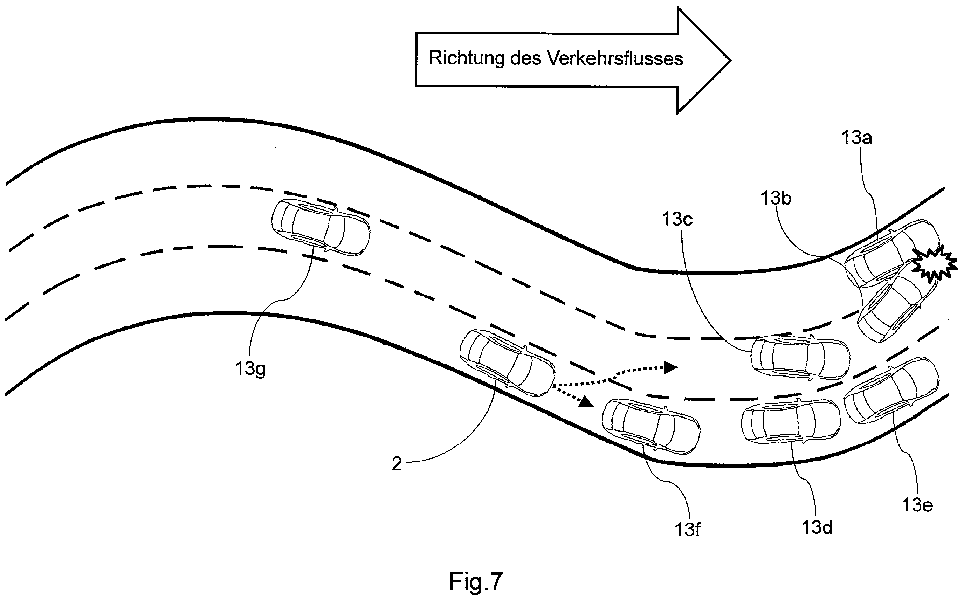

Ein solches zukünftiges Fahrszenario ist in **Fig. 7** dargestellt. Das Fahrzeug 2 wurde auf für die Trajektorie 10b geführt und die Geschwindigkeit reduziert, da das Fahrerassistenzsystem 1 beim Simulieren 106a, 106b vorausgesehen hat, dass alle Fahrzeuge auf der rechten Fahrspur an den durch den Unfall blockierten Fahrzeugen 13a, 13b vorbeifahren müssen.

In dem dann momentanen Fahrszenario der Fig. 7 kann das Fahrerassistenzsystem 1 des Fahrzeugs 2 wiederum wählen, ob es auf der rechten Spur bleibt und dem vorausfahrenden Fahrzeug 13f folgt oder nochmals einen Spurwechsel vornimmt, um beim Einscheren im Reißverschlussverfahren das vorausfahrende Fahrzeug 13f doch zu überholen.

Beim Auswählen 107a der idealen Trajektorie bzw. beim Berechnen 107b der idealen Trajektorie werden erfindungsgemäß vorzugsweise zusätzlich zu dem Ergebnis der Simulation 106a, 106b Randbedingungen berücksichtigt, welche Fahrstilattribute charakterisieren. Die Fahrstilattribute geben hierbei vorzugsweise objektive Kriterien an, wie ein Insasse oder eine Gruppe von Insassen, welche beispielsweise durch Alter oder Geschlecht gekennzeichnet werden, einen Fahrstil des Fahrerassistenzsystems 1, welcher sich in der jeweiligen Trajektorie manifestiert, wahrnehmen wird. Solche Fahrstilattribute können beispielsweise die Fahrzeit, der empfundene Energieverbrauch, der objektive Energieverbrauch, die empfundene Sicherheit, die Fahrdynamik und/oder auch die Fahrbarkeit sein. Idealerweise bilden die Randbedingungen einen Fahrstil des Insassen oder der Insassengruppe nach. Hierbei kann allerdings vorzugsweise auch berücksichtigt werden, dass ein Insasse als Beifahrer eines Fahrerassistenzsystems 1 andere Ansprüche an den Fahrstil legen wird, als wenn dieselbe Person selbst fahren würde. Bei der Berechnung werden verschiedene Fahrstilattribute vorzugsweise unterschiedlich gewichtet und zum Erreichen eines Gesamtoptimums kann insbesondere die Optimierung einer Kostenfunktion angewandt werden.

Um sich verändernden Umweltbedingungen oder auch Eigenschaften des Fahrzeugs 2 anzupassen, kann des Weiteren vorgesehen sein, dass das Fahrerassistenzsystem 1 zurückgelegte Trajektorien und/oder Fahrszenarien auswertet 108. Die Randbedingungen können entsprechend modifiziert werden, um Abweichungen von vorgegebenen Zielkorridoren in Bezug auf die Fahrstilattribute unter den geänderten Bedingungen zu erfüllen.

Zusätzlich kann ein Kennwert berechnet werden 109, welcher die Leistung des Fahrerassistenzsystems 1 bewertet.

Vorzugsweise wird das Auffinden einer idealen Trajektorie für einen Umgang mit einem zukünftigen Fahrszenario durch das Fahrerassistenzsystem 1 durch eine Kommunikation des Fahrerassistenzsystems 1 mit ausgewählten Fahrzeugsteuerungen ergänzt, um das Fahrzeug 2 auf Bedingungen auf einem vorausliegenden Streckenabschnitt 9a vorzubereiten. So kann beispielsweise die Lenkungssteuerung informiert werden, dass eine heftige Lenkbewegung unmittelbar bevorsteht oder die Bremssteuerung kann vorbereitet werden, dass eine heftige Bremsung bevorsteht. Die Bremssteuerung kann dann beispielsweise einen besonders hohen hydraulischen Druck erzeugen. Auch die Federung kann beispielsweise auf Bodenwellen vorbereitet werden, so dass diese im Idealfall ausgeglichen werden können. Das Simulieren erfolgt vorzugsweise in Schritten von etwa 1 Sekunde, und weiter vorzugsweise wird hierbei ein Zeitraum der nächsten 10 Sekunden bis zu etwa 1 Minute abgedeckt.

Wie bereits in Bezug auf das Fahrerassistenzsystem 1 nach Fig. 1 beschrieben, weist die Erfindung als weiteren Aspekt ein Einlernen der Randbedingungen in Bezug auf die Fahrstilattribute auf. Dieses Einlernen erfolgt vorzugsweise während einer Trainingsphase, während welcher der Fahrer wenigstens die Längs- und Quersteuerung des Fahrzeugs 2 manuell kontrolliert. Weiter vorzugsweise handelt es sich insbesondere um ein kontinuierliches Training: Immer dann, wenn der Fahrer das Fahrzeug 2 selbst führt, wechselt das Fahrerassistenzsystem 1 in den Lernbetrieb. Alternativ oder zusätzlich kein ein kontinuierlicher Lernbetrieb auch während des automatisierten Führens des Fahrzeugs erfolgen, wie im Folgenden gezeigt wird.

In der Trainingsphase des Fahrerassistenzsystems 1 werden Werte wenigstens eines Stellparameters zum Führen des Fahrzeugs, insbesondere parallel zu Werten des wenigstens eines Eingangsparameters, aufgenommen 101 und in dem zweiten Datenspeicher 15 abgespeichert. Aus den jeweiligen Werteparametern zum gleichen Zeitpunkt oder in einem gleichen Zeitabschnitt ergeben sich Korrelationen, welche Fahrerreaktionen in verschiedenen Fahrszenarien widerspiegeln und daher Informationen über den Fahrstil des Fahrers enthalten. Auf der Grundlage dieser Informationen werden Randbedingungen aufgestellt 103. Auf diese vorbestimmten Randbedingungen greift das Fahrerassistenzsystem 1 beim hochautomatisierten oder vollautomatisierten Führen des Fahrzeugs 2 zu, um eine für den Fahrer möglichst angenehme Wahrnehmung des Führens des Fahrzeugs zu erreichen.

Zusätzlich oder alternativ zu den Werten des Stellparameters können auch Werte wenigstens eines Körperparameters, welcher die Körperfunktion eines Fahrzeuginsassen, insbesondere des Fahrers, widerspiegelt, aufgenommen werden 101. Dies kann beispielsweise mit einem intelligenten Gerät, insbesondere einer intelligenten Uhr (smart device, smart watch), bewerkstelligt werden. Die objektiven Werte des Körperparameters werden hierbei so gewählt, dass diese eine subjektive Wahrnehmung des Fahrstils eines Fahrerassistenzsystems 1 charakterisieren können. Insbesondere kommen hierfür die Herzfrequenz, der Blutdruck, der Adrenalinspiegel und/oder die Atemaktivität eines Insassen in Frage. Auch die Werte der Körperparameter werden mit Werten der Eingangsparameter, d.h. mit den verschiedenen Fahrszenarien korreliert und hieraus Randbedingungen abgeleitet, welche beim Führen des Fahrzeugs als Regel dienen. Das Erfassen 101 von Körperparametern setzt sich vorzugsweise während dem hochautomatisierten oder vollautomatisierten Fahrbetrieb fort, so dass weitere Daten insbesondere zur Bewertung vergangener Fahrszenarien und/oder zurückgelegter Trajektorien, gewonnen werden.

Die Korrelation bzw. aktualisierte Korrelation gehen in die Auswahl 107a bzw. die Berechnung 107b der idealen Trajektorie ein.

Die Erfindung ermöglicht eine umfassende Optimierung eines durch ein Fahrerassistenzsystem 1 durchgeführten Fahrbetriebs. Hierbei gehen nicht nur gesetzliche Vorgaben und sicherheitsrelevante Vorgaben in die Führung des Fahrzeugs ein, sondern auch durch einen speziellen Fahrer oder eine spezielle Fahrergruppe bevorzugte Fahrstile, welche durch die Fahrstilattribute definiert werden. Dass Fahrerassistenzsystem 1 ist hierbei in der Lage, sich eigenständig auf den jeweiligen Fahrer und das Fahrzeug bzw. Modifikationen am Fahrzeug zu adaptieren. Hierdurch wird gewährleistet, dass das Fahrerassistenzsystem 1 einen für das jeweilige Fahrzeug 2 bzw. dessen Fahrzeugkonfigurationen und/oder für den jeweiligen Fahrer optimalen Fahrstil aufweist. Je nach Anforderung der momentanen oder zukünftigen Fahrszenarien und der Insassen des Fahrzeugs 2 kann hierbei insbesondere eine Optimierung des Energieverbrauchs des Fahrzeugs 2 durchgeführt werden. So können alle Vorgaben durch die Fahrszenarien und die Randbedingungen beispielsweise in eine Energiekostenfunktion eingehen. Auf der Grundlage von Energieanforderungen verschiedener Aggregate des Fahrzeugs 2 für momentane und zukünftige Fahrszenarien kann hierbei ein Energiepreis bestimmt werden. Durch das Zuteilen von Wertkontingenten an die verschiedenen Aggregate des Fahrzeugs 2 kann jedes Aggregat entscheiden, ob es im Fahrzeug 2 verfügbare Energie abnimmt oder einspeist.

### Bezugszeichenliste

- 1: Fahrerassistenzsystem
- 2: Fahrzeug
- 3a, 3b, 3d: Sensor
- 4: erste Datenschnittstelle
- 5: zweite Datenschnittstelle
- 6: Vorhersagemodul
- 7: Optimierungsmodul
- 8: Steuerungsmodul
- 9a, 9b: Fahrbahnabschnitt
- 10, 10a, 10a, 10c: Trajektorie
- 11: erster Datenspeicher
- 12: zentraler Server
- 13a, 13b, 113c, 13d, 13e, 13f, 13g: Verkehrsteilnehmer
- 14: Fahrstilselektormodul
- 15: zweiter Datenspeicher

## Patentansprüche

1. Verfahren (100) zum Erzeugen von Steuerdaten für ein regelbasiertes Unterstützen eines Fahrers beim Führen eines Fahrzeugs (2), insbesondere mittels eines Fahrerassistenzsystems (1), welches folgende Arbeitsschritte aufweist:
- Erfassen (101) von Werten wenigstens eines Stellparameters zum Führen des Fahrzeugs (2) und eines Körperparameters, welcher die Körperfunktion eines Fahrzeuginsassen, insbesondere des Fahrers, wenigstens teilweise charakterisiert;
- Erfassen (102) von Werten wenigstens eines Eingangsparameters, welcher ein Fahrszenario wenigstens teilweise charakterisiert;
- Aufstellen (103) wenigstens einer Randbedingung zum Einstellen des wenigstens einen Stellparameters in Abhängigkeit des wenigstens einen Eingangsparameters auf der Grundlage der erfassten Werte; und
- Ausgeben (104) von Steuerdaten zum Führen des Fahrzeugs (2), welche die wenigstens eine Randbedingung als Regel berücksichtigen.

2. Verfahren (100) nach Anspruch 1, des Weiteren den folgenden Arbeitsschritt aufweisend:
Führen (105) des Fahrzeugs (2), wenigstens zeitweise, auf der Grundlage der Steuerdaten.

3. Verfahren (100) nach Anspruch 1 oder 2, wobei die wenigstens eine Randbedingung einen Fahrstil des Fahrers oder einer Fahrergruppe nachbildet.

4. Verfahren (100) nach einem der vorhergehenden Ansprüche, wobei die wenigstens eine Randbedingung einen adaptierten Fahrstil des Fahrers oder einer Fahrergruppe nachbildet, welcher die unterschiedliche Empfindung des Fahrers oder einer Fahrergruppe zwischen automatischer Führung und manueller Führung des Fahrzeugs (2) widerspiegelt.

5. Verfahren (100) nach einem der vorhergehenden Ansprüche, wobei das Erfassen von Werten wenigstens teilweise während eines automatischen Führens (105), insbesondere durch das Fahrerassistenzsystem (1), des Fahrzeugs (2) vorgenommen wird.

6. Verfahren (100) nach einem der vorhergehenden Ansprüche, wobei der wenigstens eine Stellparameter angibt, ob der Fahrer bei einer Konstellation des wenigstens einen Stellparameters zu dem wenigstens einen Eingangsparameter ein automatisches Führen, insbesondere durch das Fahrerassistenzsystem (1), des Fahrzeugs (2) unterbricht.

7. Verfahren (100) nach einem der Ansprüche 2 bis 6, des Weiteren den folgenden Arbeitsschritt aufweisend:
Simulieren (106c), parallel zum Führen (105) des Fahrzeugs (2), von wenigstens einem zukünftigen Fahrszenario auf der Grundlage der Werte des wenigstens eines Eingangsparameters und Simulieren von wenigstens einer Trajektorie (10a, 10b, 10c) des Fahrzeugs (2) auf der Grundlage des wenigstens einen zukünftigen Fahrszenarios, wobei die Steuerdaten auf der wenigstens einen simulierten Trajektorie (10a, 10b, 10c) beruhen.

8. Verfahren (100) nach Anspruch 7, wobei das Simulieren in Echtzeit erfolgt, insbesondere auf der Grundlage von Echtzeitdaten des vorliegenden Fahrszenarios.

9. Verfahren nach Anspruch 7 oder 8, wobei eine Mehrzahl möglicher voraussichtlicher Trajektorien (10a, 10b, 10c) simuliert wird und das Verfahren (100) des Weiteren den folgenden Arbeitsschritt aufweist:
Bewerten (107c) Mehrzahl von möglichen voraussichtlichen Trajektorien auf der Grundlage von wenigstens einer Randbedingung, wobei die Steuerdaten die am besten bewertete voraussichtliche Trajektorie widerspiegeln.

10. Verfahren (100) nach einem der vorhergehenden Ansprüche, wobei die wenigstens eine Randbedingung ein Fahrstilattribut aus der folgenden Gruppe charakterisiert: Fahrzeit, Emission, Energieverbrauch, Sicherheit, Fahrdynamik, Fahrbarkeit, empfundene Effizienz, empfundene Sicherheit.

11. Verfahren (100) nach einem der Ansprüche 9 oder 10, wobei mehrere Randbedingungen berücksichtigt werden und deren Fahrstilattribute unterschiedlich gewichtet werden.

12. Verfahren (100) nach einem der vorhergehenden Ansprüche, wobei beim Aufstellen der wenigstens einen Randbedingung berücksichtigt wird, dass der wenigstens eine Körperparameter wenigstens einen vorgegebenen Grenzwert nicht überschreitet und/oder innerhalb wenigstens eines Wertebereichs liegt.

13. Fahrerassistenzsystem (1) zum Unterstützen eines Fahrers beim Führen eines Fahrzeugs (2), aufweisend
- wenigstens einen Sensor (3a, 3b, 3c, 3d), welcher eingerichtet ist, um Fahrsituationsdaten in Bezug auf das Fahrzeug (2) und Körperparameterdaten des Fahrers wenigstens teilweise zu erfassen,
- ein Fahrstilselektormodul (14), wobei das Fahrstilselektormodul (14) einen Datenspeicher (15) aufweist und eingerichtet ist, um auf die Fahrsituationsdaten und Körperparameterdaten des wenigstens einen Sensors (3a, 3b, 3c, 3d) und Daten von wenigstens einem Stellparameter zum Führen des Fahrzeugs (2), insbesondere über eine CAN-Schnittstelle, zuzugreifen, wobei das Fahrstilselektormodul (14) eingerichtet ist, Werte des wenigstens einen Stellparameters und die Sensordaten in dem Datenspeicher (15) abzulegen und wenigstens eine Randbedingung in Bezug auf den wenigstens einen Stellparameter in Abhängigkeit der abgelegten Daten aufzustellen, und
- eine Schnittstelle zum Ausgeben von Steuerdaten zum Führen des Fahrzeugs (2), welche die wenigstens eine Randbedingung als Regel berücksichtigen.

14. Computerprogramm, das Anweisungen umfasst, welche, wenn sie von einem Computer oder mehreren Computern ausgeführt werden, diesen dazu veranlassen, die Schritte eines Verfahrens gemäß einem der Ansprüche 1 bis 12 auf einem Fahrerassistenzsystem gemäß Anspruch 13 ausführen.

15. Computer-lesbares Medium, auf dem ein Computerprogramm nach Anspruch 14 gespeichert ist.

## Claims

1. Method (100) for generating control data for rule-based support of a driver when driving a vehicle (2), in particular by means of a driver assistance system (1), which has the following working steps:
- Detecting (101) values of at least one actuation parameter for driving the vehicle (2) and a body parameter which at least partially characterizes the body function of a vehicle occupant, in particular the driver;
- Acquiring (102) values of at least one input parameter that at least partially characterizes a driving scenario;
- establishing (103) at least one boundary condition for adjusting the at least one control parameter in response to the at least one input parameter based on the sensed values; and
- Outputting (104) control data for driving the vehicle (2) which takes the at least one boundary condition into account as a rule.

2. Method (100) of claim 1, further comprising the following step:
Guiding (105) the vehicle (2), at least temporarily, based on the control data.

3. Method (100) of claim 1 or 2, wherein the at least one boundary condition reproduces a driving style of the driver or a group of drivers.

4. Method (100) according to any one of the preceding claims, wherein the at least one boundary condition reproduces an adapted driving style of the driver or a driver group, which reflects the different sensation of the driver or a driver group between automatic guidance and manual guidance of the vehicle (2).

5. Method (100) according to any one of the preceding claims, wherein the acquisition of values is at least partially performed during automatic driving (105), in particular by the driver assistance system (1), of the vehicle (2).

6. Method (100) according to any one of the preceding claims, wherein the at least one actuation parameter indicates whether the driver interrupts automatic guidance of the vehicle (2), in particular by the driver assistance system (1), in a constellation of the at least one actuation parameter to the at least one input parameter.

7. Method (100) according to any one of claims 2 to 6, further comprising the following step:
simulating (106c), in parallel with driving (105) the vehicle (2), at least one future driving scenario based on the values of the at least one input parameter, and simulating at least one trajectory (10a, 10b, 10c) of the vehicle (2) based on the at least one future driving scenario, wherein the control data is based on the at least one simulated trajectory (10a, 10b, 10c).

8. Method (100) according to claim 7, wherein the simulating is performed in real time, in particular based on real time data of the present driving scenario.

9. Method according to claim 7 or 8, wherein a plurality of possible prospective trajectories (10a, 10b, 10c) are simulated, and the method (100) further comprises the step of:
Evaluating (107c) a plurality of possible prospective trajectories based on at least one constraint, wherein the control data reflects the best evaluated prospective trajectory.

10. Method (100) according to any one of the preceding claims, wherein the at least one constraint characterizes a driving style attribute selected from the group consisting of: Drive Time, Emission, Energy Consumption, Safety, Driving Dynamics, Driveability, Perceived Efficiency, Perceived Safety.

11. Method (100) according to any one of claims 9 or 10, wherein multiple constraints are considered and their driving style attributes are weighted differently.

12. Method (100) according to any one of the preceding claims, wherein, when setting up the at least one boundary condition, it is taken into account that the at least one body parameter does not exceed at least one predetermined limit value and/or lies within at least one value range.

13. Driver assistance system (1) for assisting a driver in driving a vehicle (2), comprising:
- at least one sensor (3a, 3b, 3c, 3d) which is arranged to at least partially detect driving situation data relating to the vehicle (2) and body parameter data of the driver,
- a driving style selector module (14), wherein the driving style selector module (14) comprises a data memory (15) and is arranged to access the driving situation data and body parameter data of the at least one sensor (3a, 3b, 3c, 3d) and data of at least one actuating parameter for driving the vehicle (2), in particular via a CAN interface, the driving style selector module (14) being arranged to store values of the at least one actuating parameter and the sensor data in the data memory (15) and to set up at least one boundary condition with respect to the at least one actuating parameter in dependence on the stored data, and
- an interface for outputting control data for driving the vehicle (2), which take into account the at least one boundary condition as a rule.

14. A computer program comprising instructions which, when executed by one or more computers, cause the computer to perform the steps of a method according to any one of claims 1 to 12 on a driver assistance system according to claim 13.

15. A computer-readable medium on which is stored a computer program according to claim 14.

## Revendications

1. Procédé (100) de génération de données de commande pour assister un conducteur sur la base de règles lors de la conduite d'un véhicule (2), en particulier au moyen d'un système d'aide à la conduite (1), qui présente des étapes de travail suivantes :
- de détection (101) de valeurs d'au moins un paramètre de réglage pour conduire le véhicule (2) et d'un paramètre de corps, qui caractérise au moins en partie la fonction de corps d'un occupant de véhicule, en particulier du conducteur ;
- de détection (102) de valeurs d'au moins un paramètre d'entrée, qui caractérise au moins en partie un scénario de conduite ;
- de définition (103) d'au moins une condition limite pour régler l'au moins un paramètre de réglage en fonction de l'au moins un paramètre d'entrée sur la base des valeurs détectées ; et
- de délivrance en sortie (104) de données de commande pour conduire le véhicule (2), qui tiennent compte de l'au moins une condition limite comme règle.

2. Procédé (100) selon la revendication 1, présentant par ailleurs l'étape de travail suivante :
de conduite (105) du véhicule (2), au moins temporairement, sur la base des données de commande.

3. Procédé (100) selon la revendication 1 ou 2, dans lequel l'au moins une condition limite reproduit un style de conduite du conducteur ou d'un groupe de conducteurs.

4. Procédé (100) selon l'une quelconque des revendications précédentes, dans lequel l'au moins une condition limite reproduit un style de conduite adapté du conducteur ou d'un groupe de conducteurs, qui reflète les différentes sensations du conducteur ou d'un groupe de conducteurs entre la conduite automatique et la conduite manuelle du véhicule (2).

5. Procédé (100) selon l'une quelconque des revendications précédentes, dans lequel la détection de valeurs est effectuée au moins en partie au cours d'une conduite automatique (105), notamment par le système d'aide à la conduite (1), du véhicule (2).

6. Procédé (100) selon l'une quelconque des revendications précédentes, dans lequel l'au moins un paramètre de réglage indique si le conducteur interrompt, dans une constellation de l'au moins un paramètre de réglage par rapport à l'au moins un paramètre d'entrée, une conduite automatique, en particulier par le système d'aide à la conduite (1), du véhicule (2).

7. Procédé (100) selon l'une quelconque des revendications 2 à 6, présentant par ailleurs l'étape de travail suivante :
de simulation (106c), en parallèle de la conduite (105) du véhicule (2), d'au moins un futur scénario de conduite sur la base des valeurs de l'au moins un paramètre d'entrée et de simulation d'au moins une trajectoire (10a, 10b, 10c) du véhicule (2) sur la base de l'au moins un futur scénario de conduite, dans lequel les données de commande reposent sur l'au moins une trajectoire simulée (10a, 10b, 10c).

8. Procédé (100) selon la revendication 7, dans lequel la simulation s'effectue en temps réel, notamment sur la base des données en temps réel du scénario de conduite existant.

9. Procédé selon la revendication 7 ou 8, dans lequel une multitude de trajectoires probables possibles (10a, 10b, 10c) est simulée et dans lequel le procédé (100) présente par ailleurs l'étape de travail suivante :
d'évaluation (107c) de la multitude de trajectoires probables possibles sur la base d'au moins une condition limite, dans lequel les données de commande reflètent la trajectoire probable la mieux évaluée.

10. Procédé (100) selon l'une quelconque des revendications précédentes, dans lequel l'au moins une condition limite caractérise un attribut de style de conduite issu du groupe suivant : temps de conduite, émissions, consommation d'énergie, sécurité, dynamique de conduite, maniabilité, efficience ressentie, sécurité ressentie.

11. Procédé (100) selon l'une quelconque des revendications 9 ou 10, dans lequel plusieurs conditions limites sont prises en compte et leurs attributs de style de conduite sont pondérés différemment.

12. Procédé (100) selon l'une quelconque des revendications précédentes, dans lequel, lors de la définition de l'au moins une condition limite, il est tenu compte du fait que l'au moins un paramètre de corps ne dépasse pas au moins une valeur limite prescrite et/ou se situe dans au moins une plage de valeurs.

13. Système d'aide à la conduite (1) pour assister un conducteur lors de la conduite d'un véhicule (2), présentant
- au moins un capteur (3a, 3b, 3c, 3d), qui est mis au point pour détecter au moins en partie des données de situation de conduite concernant le véhicule (2) et des données de paramètres de corps du conducteur,
- un module de sélection de style de conduite (14), dans lequel le module de sélection de style de conduite (14) présente une mémoire de données (15) et est mis au point pour accéder aux données de situation de conduite et aux données de paramètres de corps de l'au moins un capteur (3a, 3b, 3c, 3d) et aux données d'au moins un paramètre de réglage pour conduire le véhicule (2), en particulier par l'intermédiaire d'une interface CAN, dans lequel le module de sélection de style de conduite (14) est mis au point pour enregistrer des valeurs de l'au moins un paramètre de réglage et les données de capteur dans la mémoire de données (15) et pour définir au moins une condition limite concernant l'au moins un paramètre de réglage en fonction des données enregistrées, et
- une interface pour délivrer en sortie des données de commande pour conduire le véhicule (2), qui tiennent compte de l'au moins une condition limite comme règle.

14. Programme informatique, qui comprend des instructions qui, lorsqu'elles sont exécutées par un ou plusieurs ordinateurs, l'invitent ou les invitent à exécuter les étapes d'un procédé selon l'une quelconque des revendications 1 à 12 sur un système d'aide à la conduite selon la revendication 13.

15. Support lisible par ordinateur, sur lequel est mémorisé un programme informatique selon la revendication 14.
